# EUROPÄISCHE PATENTANMELDUNG

(11) **EP 3 474 212 A1**
(43) Veröffentlichungstag der Anmeldung: **24.04.2019**
(21) Anmeldenummer: 17197452.0
(22) Anmeldetag: 20.10.2017
(51) Int. Cl.: G06Q 30/00

(54) **VERFAHREN ZUM ANALYSIEREN VON DARSTELLUNGEN VON MEDIENINHALTEN**

(71) Anmelder: Becton Dickinson Rowa Germany GmbH, 53539 Kelberg (DE)
(72) Erfinder: VONOFAKOS, Antonios, 60594 Frankfurt am Main (DE); SIEGMANN, Markus, 65824 Schwalbach (DE)
(74) Vertreter: Zenz Patentanwälte Partnerschaft mbB

(57) **Zusammenfassung**

Die Erfindung betrifft ein Verfahren zum Analysieren der Auswirkung von Darstellungen von Medieninhalten in einem Verkaufsraum. Bekannte Verfahren zum Analysieren der Auswirkung von Darstellungen von Medieninhalten sind aufwendig und sehr ungenau, da man auf Umfragen und dergleichen angewiesen ist. Dieses Problem wird gelöst, indem eine mehrere Medieninhalte umfassende Gesamtpräsentation auf einem Server-Computer bereitgestellt wird, die Gesamtpräsentation auf einen Client-Computer übertragen wird und die Gesamtpräsentation für einen Wiedergabezeitraum auf einer in einem Verkaufsraum angeordneten Medien-Wiedergabeeinrichtung wiedergegeben wird. Dazu wird ein Erfassungszeitraum bestimmt und von einem Warenwirtschaftssystem werden für den Erfassungszeitraum Erfassungs-Informationen zu den Produkten abgerufen. Die Erfassungs-Informationen werden mit Kontroll-Informationen zu den Produkten verglichen werden und die Vergleichsergebnisse ausgewertet, wobei die Vergleichsergebnisse die Auswikrungen der Darstellungen aufzeigen.

## Beschreibung

Die vorliegende Erfindung betrifft ein Verfahren zum Analysieren der Auswirkung von Darstellungen von Medieninhalten in einem Verkaufsraum, ein Computersystem, welches zum Ausführen des Verfahrens eingerichtet ist sowie ein Computerprogrammprodukt, welches einen Mikroprozessor zur Ausführung des Verfahrens veranlasst.

Das Platzieren von Medieninhalten, beispielsweise Produktwerbung in Form von Postern oder dergleichen, ist seit langem, auch für Apotheken, bekannt. In jüngerer Zeit werden die Medieninhalte auch über Wiedergabeeinrichtungen wie beispielsweise TV-Bildschirme oder dergleichen präsentiert. Bei derartigen Wiedergabeeinrichtungen hat man die Möglichkeit, die dargestellten Medieninhalte, seien es Standbilder, Animationen oder kurze Werbefilme, bezüglich eines Produktes oder einer Dienstleistung, nach einem beliebigen Zeitplan zu ändern.

Zur Einschätzung einer Effektivität einer Werbung als Grundlage für beispielsweise eine Kosten-/Nutzen-Abwägung gibt es bei Online-Werbung im Internet eine Vielzahl von bekannten Verfahren. Die Wirkung der Werbung kann beispielsweise ermittelt werden, indem analysiert wird, wie viele Personen eine bestimmte Werbung "anklicken". Die Anzahl der "Klicks" gibt dann unmittelbar an, wie sich eine Werbung auswirkt.

Bei Werbung in beispielsweise dem Fernsehen oder dem Rundfunk ist eine solche direkte und unmittelbare Auswertung nicht möglich. Nur mit großem Aufwand, erheblicher Zeitverzögerung und großer Ungenauigkeit ist es möglich, die Auswirkung von Werbung in Verkaufsräumen, beispielsweise Offizinen von Apotheken, bei üblichen Werbemaßnahmen wie Postern und dergleichen zu ermitteln.

Ein entsprechendes Verfahren zum unmittelbaren Auswerten der Auswirkung einer Darstellung von wechselnden Medieninhalten in einem Verkaufsraum ist nicht bekannt. Es ist daher Aufgabe der vorliegenden Erfindung, ein Verfahren zum unmittelbaren Erfassen einer Auswirkung von Darstellungen von wechselnden Medieninhalten in einem Verkaufsraum, beispielsweise einer Offizin einer Apotheke, bereitzustellen.

Die Aufgabe wird erfindungsgemäß gelöst durch ein Verfahren, bei welchem zunächst auf einem Server-Computer eine mehrere Medieninhalte umfassende Gesamtpräsentation bereitgestellt wird

und diese Gesamtpräsentation auf einen Client-Computer eines Dritten übertragen wird.

Diese Übertragung kann mit einem beliebigen, aus dem Stand der Technik bekannten Datenübertragungsverfahren durchgeführt werden. Beispielsweise können der Server-Computer und der Client-Computer über ein kabelloses oder kabel-basiertes Kommunikationsnetzwerk miteinander verbunden sein. Beispielsweise ist es denkbar, dass der Client-Computer und der Server-Computer über das Internet zumindest temporär miteinander verbunden sind. Die zum Übertragen der Gesamtpräsentation notwendige Technik ist dem Fachmann ebenfalls bekannt.

Die Gesamtpräsentation wird dann für einen vorgegebenen Wiedergabezeitraum auf einer in dem Verkaufsraum angeordneten Medien-Wiedergabeeinrichtung wiedergegeben. Bei dieser Medien-Wiedergabeeinrichtung kann es sich beispielsweise um ein Fernsehgerät oder einen Monitor mit beispielsweise einer Touchscreen-Funktionalität handeln. Die Medien-Wiedergabeeinrichtung kann separiert von dem Client-Computer ausgebildet sein, es ist jedoch auch möglich, dass diese beiden Komponenten als ein gemeinsames Bauteil ausgeführt sind. Das gemeinsame Bauteil kann beispielsweise ein Smart-TV oder dergleichen sein. Der vorgegebene Wiedergabezeitraum gibt an, in welchem Zeitraum die Gesamtpräsentation wiedergegeben werden soll. Beispielsweise ist es denkbar, hier eine Woche oder einen Monat vorzugeben.

In Abhängigkeit von dem Wiedergabezeitraum und spezifischen Erfassungsvorgaben wird dann ein Erfassungszeitraum bestimmt. Bei der spezifischen Erfassungsvorgabe kann es sich beispielsweise um die Anweisung handeln, dass der Erfassungszeitraum den Wiedergabezeitraum und einen zu bestimmenden nachfolgenden Zeitraum umfasst. Wenn beispielsweise der Wiedergabezeitraum eine Woche beträgt und die spezifische Erfassungsvorgabe anweist, den Wiedergabezeitraum um eine Woche zu verlängern, gelangt man zu einem Erfassungszeitraum von zwei Wochen.

Für den wie oben bestimmten Erfassungszeitraum werden von dem mit dem Verkaufsraum gekoppelten Warenwirtschaftssystem Erfassungs-Informationen abgerufen oder empfangen und gespeichert. Diese Erfassungs-Informationen umfassen die Verkaufszahlen zu den von der Gesamtpräsentation umfassten Produkten. Das Abrufen oder Empfangen und Speichern der Erfassungs-Informationen kann nach Ablauf des Erfassungszeitraums durchgeführt werden, es ist aber auch möglich, die Erfassungs-Informationen nach vorgegebenen Zeitintervallen abzurufen oder zu empfangen und zu speichern, um gegebenenfalls unmittelbar eine zeitliche Veränderung der Verkaufszahlen in Reaktion auf das Darstellen einer Gesamtpräsentation abbilden zu können.

Die Erfassungs-Informationen werden mit Kontroll-Informationen zu den von der Gesamtpräsentation umfassten Produkten verglichen. Die Vergleichsergebnisse können dem Dritten und/oder einem Anbieter, dessen Medieninhalt von der Gesamtpräsentation umfasst ist, bereitgestellt werden und/oder von dem Betreiber des Server-Computers zur Incentivierung eines Dritten und/oder Bepreisung eines Anbieters genutzt werden.

Indem erfindungsgemäß während oder gleich nach Ablauf des definierten Erfassungszeitraums die Erfassungs-Informationen mit Kontroll-Informationen verglichen werden, ist es möglich, die unmittelbare Auswirkung von Darstellungen von Medieninhalten in einem Verkaufsraum zu ermitteln. Dazu ist es notwendig, dass, wie es erfindungsgemäß vorgesehen ist, zumindest nach dem Erfassungszeitraum auf das Warenwirtschaftssystem zugegriffen wird, welches mit dem Verkaufsraum gekoppelt ist. Im Rahmen dieser Erfindung ist damit ein Warenwirtschaftssystem gemeint, welches die Verkäufe in dem Verkaufsraum begleitet, in welchem die Medien-Wiedergabeeinrichtung angeordnet ist.

Mit dem erfindungsgemäßen Verfahren lässt sich rasch ermitteln, ob von der Gesamtpräsentation umfasste Medieninhalte Auswirkungen auf den Abverkauf von Produkten in dem Verkaufsraum haben, und zwar auch für den Fall, dass innerhalb eines vorgegebenen Wiedergabezeitraums eine Gesamtpräsentation mit einer Vielzahl von Medieninhalten wiedergegeben wird.

Erfindungsgemäß lassen sich so innerhalb eines vorgegebenen Zeitraums Medieninhalte zu einer Mehrzahl von Produkten wiedergeben, es bleibt aber gleichzeitig möglich, die Auswirkung der Darstellung der mehreren Medieninhalte zu überprüfen.

Wie genau die mehrere Medieninhalte umfassende Gesamtpräsentation zusammengestellt wird, d.h. wie viele und welche Medieninhalte sie umfasst, ist für die vorliegende Erfindung nicht wesentlich. Um einem Dritten, beispielsweise einem Apotheker, eine Anpassung an örtliche Vorgaben oder persönliche Wünsche zu ermöglichen, gleichzeitig aber dessen Zeitaufwand für die Anpassung möglichst gering zu halten, ist es bei einer bevorzugten Ausführungsform vorgesehen, dass die Gesamtpräsentation bereitgestellt wird, indem auf dem Server-Computer zumindest eine mehrere Medieninhalte umfassende Entwurfspräsentation bereitgestellt wird und von einem Dritten diejenigen Medieninhalte einer Entwurfspräsentation ausgewählt werden, die von der Gesamtpräsentation umfasst sein sollen. Sind mehrere Entwurfspräsentationen bereitgestellt, ist auch eine Auswahl einer der mehreren Entwurfspräsentationen durch den Dritten erforderlich. Das Auswählen kann beispielsweise derart durchgeführt werden, dass ein Dritter diejenigen Medieninhalte einer Entwurfspräsentation, die nicht von der Gesamtpräsentation umfasst sein sollen, abwählt, wobei es vorgesehen sein kann, dass auf dem Server-Computer festgelegt wird, dass die Gesamtpräsentation mindestens und/oder maximal x Medieninhalte umfassen muss bzw. darf. Ferner kann festgelegt sein, dass gewisse Medieninhalte nur zusammen mit anderen Medieninhalten aufgenommen sein dürfen, d.h. durch die Abwahl eines bestimmten Medieninhalts ein anderer "gekoppelter" Medieninhalt ebenfalls abgewählt wird. Alternativ kann es auch vorgesehen sein, dass der Dritte die Medieninhalte aktiv aussucht, wobei ebenfalls die vorgenannten Voraussetzungen (Anzahl, Kopplung mehrerer Medieninhalte) greifen können.

Bei einer alternativen Ausführungsform, bei welcher einem Dritten ein größerer Spielraum für das Einwirken auf die Gesamtpräsentation eingeräumt wird, ist es vorgesehen, dass die Gesamtpräsentation bereitgestellt wird, indem von einem Dritten Präsentations-Vorgaben zu einer gewünschten Gesamtpräsentation empfangen und auf dem Server-Computer gespeichert werden, von einem Anbieter von Produkten Medieninhalte zu Produkten empfangen und auf dem Server-Computer gespeichert werden, auf dem Server-Computer gespeicherte Medieninhalte von zumindest einem Anbieter unter Berücksichtigung der Präsentations-Vorgaben des Dritten zu einer mehrere Medieninhalte umfassenden Gesamtpräsentation zusammengestellt werden und diese Gesamtpräsentation auf einen Client-Computer des Dritten übertragen wird. Auch bei dieser Variante können die vorgenannten Voraussetzungen für ein Zusammenstellen einer Gesamtpräsentation vorgegeben sein.

Von einem Dritten, beispielsweise einem Betreiber des Verkaufsraums, werden Präsentations-Vorgaben zusammengestellt und an den Server-Computer übertragen bzw. von diesem empfangen und dort gespeichert. Mit den Präsentations-Vorgaben kann der Dritte Medieninhalte/Produkte beschreiben, die bevorzugt zu der Gesamtpräsentation zusammengestellt werden sollen.

Die Präsentations-Vorgaben können beispielsweise verschiedene Produktgruppen, die in dem Verkaufsraum angeboten werden sollen, betreffen. Bei Apotheken können die Präsentations-Vorgaben beispielsweise vorgeben, dass die Gesamtpräsentation Medieninhalte zu Grippe- und Erkältungsmitteln umfasst. Alternativ kann vorgegeben werden, dass die Gesamtpräsentation lediglich Medieninhalte zu solchen Produkten umfasst, die noch nicht länger als sechs Monate auf dem Markt sind. Die genaue Gestaltung der Präsentations-Vorgaben ist abhängig von der Art der in dem Verkaufsraum verkauften Produkte und kann in Abhängigkeit von den Bedürfnissen des Dritten und der Art der angebotenen Produkte beliebig verfeinert werden.

Im Rahmen der vorliegenden Erfindung soll der Begriff der "Produkte" sowohl Produkte als solche als auch Dienstleistungen umfassen, das heißt die Medieninhalte können auch die Dienstleistungen eines nahegelegenen Dienstleistungsanbieters darstellen.

Wie genau die Gesamtpräsentation auf der Basis der von einem Dritten bereitgestellten und auf dem Server-Computer gespeicherten Präsentations-Vorgaben zusammengesellt wird, ist für die vorliegende Erfindung nicht wesentlich und kann in Abhängigkeit von der dazu verwendeten Software auf eine Vielzahl von Wegen durchgeführt werden. Das Zusammenstellen einer Gesamtpräsentation anhand vorgegebener Kriterien ist aus dem Stand der Technik bekannt und für den Fachmann leicht durchführbar.

Bei einer weiteren bevorzugten Ausführungsform, bei welcher die Möglichkeiten eines Dritten, auf die Gesamtpräsentation einzuwirken beschränkter sind, bei welcher aber das Zusammenstellen der Gesamtpräsentation rascher durchgeführt werden kann, ist es vorgesehen, dass die Gesamtpräsentation bereitgestellt wird, indem auf dem Server-Computer zumindest eine mehrere Medieninhalte umfassende Entwurfspräsentation bereitgestellt wird, von einem Dritten Präsentations-Vorgaben zu einer gewünschten Gesamtpräsentation empfangen und auf dem Server-Computer gespeichert werden, unter Berücksichtigung der Präsentations-Vorgaben eine Entwurfspräsentation ausgewählt wird, und unter Berücksichtigung der Präsentations-Vorgaben diejenigen Medieninhalte einer Entwurfspräsentation ausgewählt werden, die von der Gesamtpräsentation umfasst sein sollen. Anhand der Präsentations-Vorgaben wird also diejenige Entwurfspräsentation, die am besten zu den Präsentations-Vorgaben passt, ausgewählt (sofern nur eine vorhanden ist wird diese automatisch ausgewählt) und anschließend diejenigen Medieninhalte zu der Gesamtpräsentation zusammengestellt, die am besten zu Präsentations-Vorgaben passen. Bei dieser Variante ist die Mitwirkungsmöglichkeit des Dritten noch relativ weitreichend, durch die Vorgabe von Entwurfspräsentationen kann aber auch seitens des Betreibers des Server-Computers bzw. der Anbieter der Medieninhalte Einfluss auf die Gesamtpräsentation genommen werden. So kann beispielsweise eine Entwurfspräsentation nur Medieninhalte zu Produkten eines Anbieters umfassen.

Erfindungsgemäß kann die Gesamtpräsentation unter Berücksichtigung der Präsentations-Vorgaben eines Dritten bereitgestellt. Die Medieninhalte werden selbstverständlich stets mit den Informationen bereitgestellt, welches Produkt von welchem Hersteller sie betreffen, um die Medieninhalte selbst geordnet in einer Datenbank auf dem Server-Computer abzulegen. Bei einer bevorzugten Ausführungsform ist es vorgesehen, dass die Medieninhalte von einem Anbieter zusammen mit einem Medien-Tag bereitgestellt werden, wobei dieser Medien-Tag beispielsweise Incentives des Anbieters beschreiben kann, die Anfallen, wenn ein Dritter die Medieninhalte in die von ihm gewünschte Gesamtpräsentation aufnimmt. So ist es beispielsweise denkbar, dass der Medien-Tag eines Medieninhaltes angibt, dass für die Aufnahme des entsprechenden Medieninhalts in die Gesamtpräsentation der Dritte eine Entlohnung von X EUR pro wiedergegebener Stunde der Gesamtpräsentation erhält. Dies kann dann sinnvoll sein, wenn ein Anbieter ein neues Produkt auf dem Markt lancieren möchte. Ein Dritter kann entsprechend getaggte Medieninhalte dann bevorzugen, indem er in den Präsentations-Vorgaben angibt, dass bevorzugt Medieninhalte in die Gesamtpräsentation aufgenommen werden sollen, die mit einem Incentive seitens des Anbieters verbunden sind.

Erfindungsgemäß ist es vorgesehen, dass eine Gesamtpräsentation für einen vorgegebenen Wiedergabezeitraum auf der Medien-Wiedergabeeinrichtung wiedergegeben wird. Wie bereits oben angemerkt, ist es denkbar, dass diese Wiedergabezeit beispielsweise eine Woche beträgt, das heißt die gleiche Gesamtpräsentation wird während der Öffnungszeiten des Verkaufsraums in einer Schleife, ggf. unterbrochen von Zusatzinformationen, wiedergegeben. Der vorgegebene Wiedergabezeitraum kann jedoch auch deutlich kürzer sein, und es kann erfindungsgemäß vorgesehen sein, dass ein Wiedergabezeitraum lediglich beispielsweise einen halben Verkaufstag umfasst und an einem Verkaufstag zwei Gesamtpräsentationen wiedergegeben werden. Dies kann sinnvoll sein, wenn basierend auf Erfahrungswerten festgestellt wurde, dass beispielsweise vormittags ein anderes Publikum den Verkaufsraum aufsucht, als dies nachmittags der Fall ist.

Auch wenn an einem Verkaufstag die vorgegebenen Wiedergabezeiträume derart gewählt sind, dass mehrere Gesamtpräsentationen gezeigt werden können, so ist diese Vorgabe doch statisch. Um seitens des Dritten dynamisch auf gewisse Umstände reagieren zu können, ist es bei einer bevorzugten Ausführungsform des erfindungsgemäßen Verfahrens vorgesehen, dass, sobald von dem Dritten neue Präsentations-Vorgaben empfangen werden, auf dem Server-Computer gespeicherte Medieninhalte unter Berücksichtigung der Medien-Vorgaben des Dritten und/oder der Medien-Tags zu einer neuen Gesamtpräsentation zusammengestellt werden, die dem Dritten zur Wiedergabe bereitgestellt wird. Alternativ kann die neue Gesamtpräsentation anhand der Präsentations-Vorgaben aus bereitgestellten Entwurfspräsentation erstellt werden. So ist es beispielsweise möglich, dass ein Dritter kurzfristig beispielsweise auf einen Wetterumschwung reagiert und die Gesamtpräsentation dementsprechend anpasst.

Bei einer bevorzugten Ausführungsform ist es vorgesehen, dass die Präsentations-Vorgaben des Dritten unter Berücksichtigung von in dem Verkaufsraum anwesenden Kunden bestimmt werden. Um dies zu ermöglichen, ist es beispielsweise denkbar, die MAC-Adressen von Mobiltelefonen der Kunden zu scannen und auf der Basis von zu diesen MAC-Adressen bzw. Kunden bekannten Kaufgewohnheiten neue Präsentations-Vorgaben zu erstellen, die dann umgehend an den Server-Computer zum Erstellen einer neuen Gesamtpräsentation übertragen werden. Auf diese Weise ist es möglich, unmittelbar auf die in dem Verkaufsraum anwesenden Kunden zu reagieren, wobei es bei Nutzung der MAC-Adressen der Mobiltelefone der Kunden notwendig ist, die mit Kunden bzw. MAC-Adressen verbundenen Kaufgewohnheiten für einen längeren Zeitraum zu speichern, um eine verlässliche Datenbasis zu erhalten.

Erfindungsgemäß wird die Gesamtpräsentation für einen vorgegebenen Zeitraum, ggf. unter Zwischenschaltung von Zusatzinformationen, in einer Schleife wiederholt. Um es einem Kunden zu ermöglichen, nähere Informationen zu einem gerade wiedergegebenen Medieninhalt bzw. dem in dem Medieninhalt dargestellten Produkt zu erhalten, ist es bei einer bevorzugten Ausführungsform vorgesehen, dass Medieninhalte zusammen mit Zusatzinhalten empfangen und gespeichert werden und die Zusatzinhalte beim Zusammenstellen der Gesamtpräsentation umfasst werden und dass bei einer Aktivierung der Medien-Wiedergabeeinrichtung Zusatzinhalte auf der Medien-Wiedergabeeinrichtung wiedergeben werden. Eine Aktivierung der Medien-Wiedergabeeinrichtung kann beispielsweise stattfinden, indem ein Kunde auf die Medien-Wiedergabeeinrichtung drückt, wenn diese eine Touchscreen-Funktionalität aufweist. Alternativ kann der Medien-Wiedergabeeinrichtung ein Betätigungsmittel zugewiesen sein, durch dessen Aktivierung die Wiedergabe der Zusatzinhalte aktiviert wird.

Wie bereits dargelegt, wird die Gesamtpräsentation innerhalb des vorgegebenen Wiedergabezeitraums in einer Schleife wiederholt. In Abhängigkeit von der Länge der Medieninhalte und der durchschnittlichen Verweilzeit eines Kunden in dem Verkaufsraum kann es vorkommen, dass ein Kunde lediglich die Wiedergabe eines Medieninhaltes während seiner Verweilzeit in dem Verkaufsraum wahrnimmt. Alternativ kann es vorkommen, dass ein Kunde die gleiche Gesamtpräsentation mehrere Male wahrnimmt. Beide Szenarien sind zu vermeiden. Bei einer bevorzugten Ausführungsform ist es daher vorgesehen, dass das Zusammenstellen der Gesamtpräsentation an eine mittlere Verweildauer eines Kunden in dem Verkaufsraum angepasst wird. Wenn beispielsweise ermittelt wird, dass die durchschnittliche Verweildauer eines Kunden in einem Verkaufsraum fünf Minuten beträgt, kann es beispielsweise sinnvoll sein, eine Gesamtpräsentation bestehend aus 10 Medieninhalten ä 30 Sekunden zusammenzustellen. Es ist dann gewährleistet, dass der "durchschnittliche" Kunde alle Medieninhalte der Gesamtpräsentation wahrnimmt bzw. die Möglichkeit dazu hat.

Die vorliegende Erfindung betrifft ferner ein Computersystem mit einem Server-Computer, einem Client-Computer und einer Medien-Wiedergabeeinrichtung, wobei die vorgegebenen Komponenten wie oben dargelegt miteinander kommunizieren oder ausgeführt sein können. Darüber hinaus sind die Komponenten des Computersystems zum Ausführen des erfindungsgemäßen Verfahrens eingerichtet.

Schließlich umfasst die vorliegende Erfindung ein Computerprogrammprodukt, aufweisend Programmanweisungen, die einen Mikroprozessor zur Ausführung und/oder Steuerung des erfindungsgemäßen Verfahrens veranlassen.

Im Nachfolgenden wird die vorliegende Erfindung anhand bevorzugter Ausführungsformen unter Bezugnahme auf die Zeichnung beschrieben, in welcher
Figur 1 ein Ablaufplan einer ersten Ausführungsform des erfindungsgemäßen Verfahrens zeigt,
Figur 2 eine Ausführungsform des erfindungsgemäßen ComputerSystems zeigt, und
Figur 3 veranschaulicht, wie die Gesamtpräsentation bei der ersten Ausführungsform des erfindungsgemäßen Verfahrens zusammengestellt wird und deren Auswirkungen ermittelt werden,
Figur 4 veranschaulicht, wie die Gesamtpräsentation bei einer zweiten Ausführungsform des erfindungsgemäßen Verfahrens zusammengestellt wird, und
Figur 5 veranschaulicht, wie die Gesamtpräsentation bei einer dritten Ausführungsform des erfindungsgemäßen Verfahrens zusammengestellt wird.

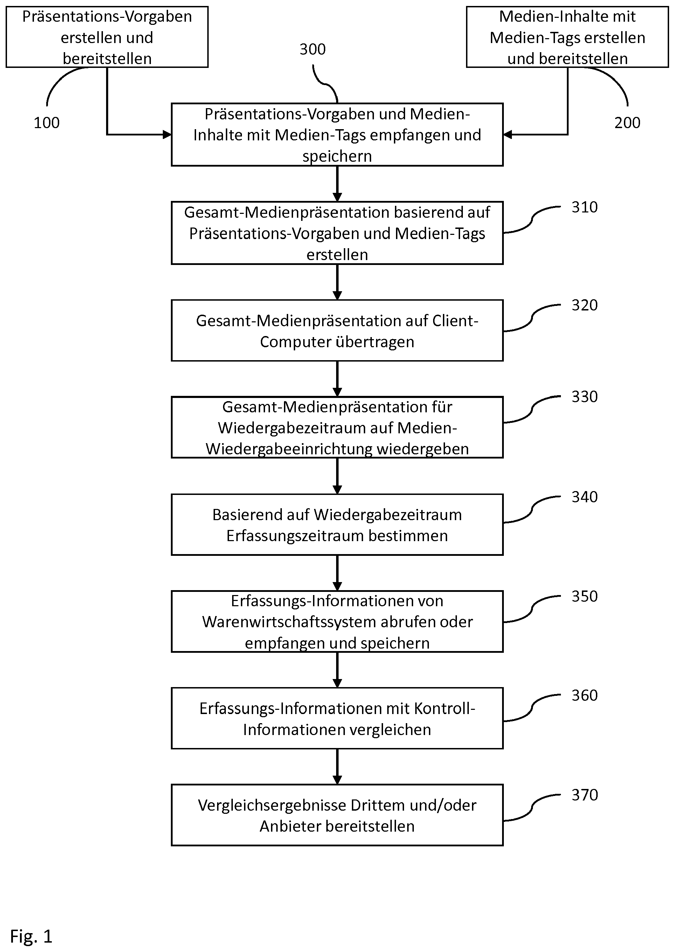

Im Nachfolgenden wird eine erste Ausführungsform des erfindungsgemäßen Verfahrens sowie eine Ausführungsform des erfindungsgemäßen Computersystems beschrieben, wobei die Beschreibung auf die Figuren 1 - 3 Bezug nimmt.

Bei der hier beschriebenen Ausführungsform des erfindungsgemäßen Verfahrens werden von einem Dritten 10, 11 in einem Schritt 100 Präsentations-Vorgaben PV1 - PVx auf einem Computer 20, 21 bereitgestellt und von einem Server-Computer 90, der Teil des erfindungsgemäßen Computersystems ist, empfangen und gespeichert. Die Präsentations-Vorgaben PV1 - PVx geben Kriterien dafür an, welche Medieninhalte ein Dritter in der von ihm gewünschten Gesamtpräsentation GP zusammengestellt haben möchte.

Analog stellt ein Anbieter 30, 31 bei der hier beschriebenen Ausführungsform des erfindungsgemäßen Verfahrens Medieninhalte MI1 - MIx mit entsprechenden Medien-Tags MT1 - MTx auf einem Computer 40, 41 bereit, und diese werden von dem Server-Computer 90 empfangen und gespeichert.

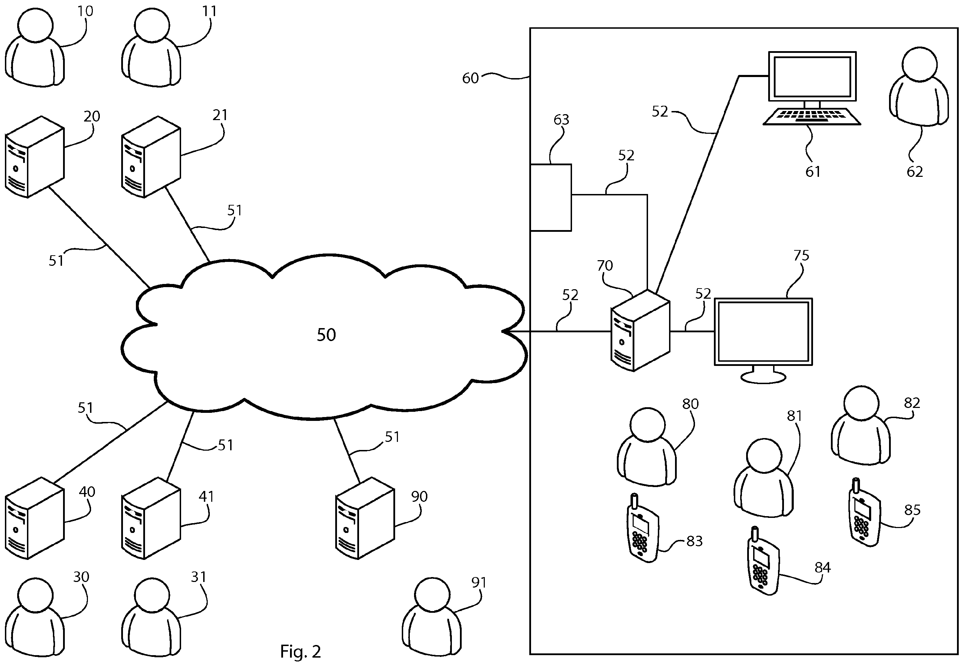

Bei der Darstellung gemäß Figur 2 sind zur Veranschaulichung zwei Dritte 10, 11 und zwei Anbieter 30, 31 dargestellt. Das Verfahren als solches soll die Auswirkungen einer Gesamtpräsentation ermitteln, die von einem Dritten in einem Verkaufsraum dargestellt wird, wobei die Gesamtpräsentation Medieninhalte von beliebig vielen Anbietern umfassen kann. Das Verfahren selbst kann aber für eine Vielzahl von Dritten ausgeführt werden, daher sind beispielhaft zwei Dritte dargestellt.

Bei der hier beschriebenen Ausführungsform des Verfahrens handelt es sich bei dem Dritten um einen Betreiber einer Apotheke und bei den Anbietern um Anbieter von in einer Apotheke frei verkäuflichen Produkten, wie beispielsweise Babynahrung, Sonnenschutzprodukte oder leichte Schmerzmittel. Die von dem Dritten vorgegebenen Präsentations-Vorgaben können also beispielsweise besagen, dass die von dem Dritten gewünschte Gesamtpräsentation nur Sonnenschutz- und Babynahrungsprodukte umfassen soll, da diese nach Erfahrungen des Dritten in der Apotheke besonders stark nachgefragt werden.

Die Präsentations-Vorgaben PVx und die Medieninhalte MIx samt Medien-Tags MTx werden über Kommunikationsverbindungen 51 eines Kommunikationsnetzwerks 50 dem Server-Computer 90 eines Dienstleisters 91, der aus den vorgenannten Informationen eine Gesamtpräsentation GP zusammenstellt, bereitgestellt, von diesem empfangen und gespeichert. Bei dem Kommunikationsnetzwerk 50 kann es sich um ein kabelloses oder kabelgebundenes Netzwerk handeln, bei den Kommunikationsverbindungen 51 kann es sich dementsprechend um kabellose oder kabelgebundene Verbindungen handeln. Beispielsweise können die Computer 20, 21, 40, 41 eines Dritten 10, 11 oder der Anbieter 30, 31 über das WWW (World Wide Web) bzw. Internet mit dem Server-Computer 90 verbunden sein, wobei ein Teil der Kommunikationsverbindungen kabellos und ein anderer Teil kabelgebunden sein kann. Wie genau die Verbindung zwischen den Computern eines Dritten, den Anbietern und dem Server-Computer 90 des Dienstleisters stattfindet, ist für die vorliegende Erfindung ohne Belang. Es können alle bekannten Kommunikationsnetzwerke und -systeme verwendet werden, wobei regelmäßig die bei dem jeweiligen Netzwerk bzw. System üblichen Sicherheitsvorkehrungen seitens eines Dritten, der Anbieter sowie des Dienstleisters getroffen werden sollten.

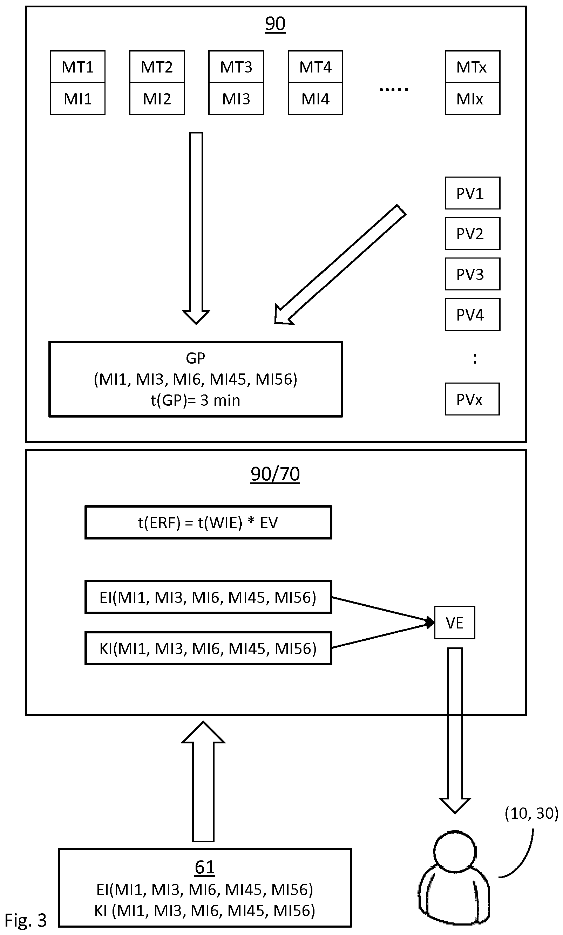

Nachdem die Präsentations-Vorgaben PVx und Medieninhalte MIx mit Medien-Tags MTx von dem Server-Computer 90 in einem Schritt 300 empfangen und gespeichert wurden, wird basierend auf den Präsentations-Vorgaben und Medien-Tags in einem Schritt 310 eine Gesamtpräsentation GP zusammengestellt, wobei dies in Figur 3 detaillierter veranschaulicht ist.

Bei dem in Figur 3 gezeigten Beispiel wurden von einem Dritten Präsentations-Vorgaben PVx bereitgestellt, anhand derer mittels der Medien-Tags MTx eine Gesamtpräsentation GP zusammengestellt wurde, die die auf dem Server-Computer 90 gespeicherten Medieninhalte MI1, MI3, MI6, MI45 und MI56 umfasst. Bei den vorgenannten Medieninhalten handelt es sich um kurze Filme, die jeweils ein Produkt präsentieren. Die Gesamtdauer der Gesamtpräsentation wird maßgeblich bestimmt durch die Länge der umfassten Medieninhalte, wobei diese durch kurze Auflockerungsinhalte voneinander getrennt sein können. Wenn die vorgenannten Medieninhalte beispielweise jeweils 30 sec lang sind und von Auflockerungsinhalten ä 6 sec getrennt sind, beträgt die Gesamtdauer t(GP) der Gesamtpräsentation 3 min (nach dem letzten Medieninhalt folgt ein Auflockerungsinhalt). Die genaue Gestaltung der Gesamtpräsentation wird jeweils durch die Präsentations-Vorgaben definiert und kann von der vorgenannten beliebig abweichen.

In einem nachfolgenden Verfahrensschritt 320 wird die zuvor zusammengestellte Gesamtpräsentation GP über Kommunikationsverbindungen und das Kommunikationsnetzwerk 50 an einen Client-Computer 70 des Dritten übertragen. Der Client-Computer 70 des Dritten ist über eine Kommunikationsverbindung 52 mit dem Kommunikationsnetzwerk 50 verbunden und ist ein Teil des erfindungsgemäßen Computersystems. Auch die Kommunikationsverbindung 52 zwischen Client-Computer und Kommunikationsnetzwerk 50 kann kabellos oder kabelgebunden sein.

Bei der gezeigten Ausführungsform ist der Client-Computer 70 des Dritten in einem Verkaufsraum 60 angeordnet und über eine weitere Kommunikationsverbindung 52 mit einer Medien-Wiedergabeeinrichtung 75 verbunden. Die Medien-Wiedergabeeinrichtung 75 kann Teil eines eigenen Computers sein, es kann aber auch die übliche Anzeigeeinrichtung des vorgenannten Client-Computers 70 sein, auf welchen die Gesamtpräsentation übertragen wurde. Bei dem hier beschriebenen Beispiel handelt es sich bei dem Verkaufsraum um die Offizin einer Apotheke.

Die Gesamtpräsentation wird für einen vorgegebenen Wiedergabezeitraum t(WIE) auf der in dem Verkaufsraum 60 angeordneten Medien-Wiedergabeeinrichtung 75 in einem Schritt 330 wiedergegeben. Der Wiedergabezeitraum t(WIE) wird von dem Dritten vorgegeben und kann beispielsweise eine Woche betragen. Alternativ ist es auch möglich, den Wiedergabezeitraum so zu gestalten, dass an einem Verkaufstag beispielsweise zwei Gesamtpräsentationen wiedergegeben werden, eine beispielsweise vormittags, die andere nachmittags. Es ist aber auch möglich, dass der Wiedergabezeitraum der Gesamtlänge der Gesamtpräsentation entspricht, beispielsweise wenn die Gesamtdauer der Gesamtpräsentation hoch ist und nach Durchlauf für einen längeren Zeitraum andere Medieninhalte wiedergegeben werden sollen.

In einem Schritt 340 wird basierend auf dem Wiedergabezeitraum t(WIE) und spezifischen Erfassungsvorgaben EV ein Erfassungszeitraum t(ERF) bestimmt. Dieser Erfassungszeitraum gibt an, innerhalb welchen Zeitraums die Auswirkungen von Darstellungen der Medieninhalte der Gesamtpräsentation analysiert werden sollen. Beispielsweise ist es möglich, dass die Analyse nach Ende des Wiedergabezeitraums für eine Woche durchgeführt wird. Alternativ ist es möglich, die Analyse gleich mit Beginn der Wiedergabe der Gesamtpräsentation in dem Verkaufsraum 60 des Dritten zu beginnen und für zehn Tage fortzuführen. Welche Erfassungsvorgaben genau definiert werden, hängt von dem Aufbau der Gesamtpräsentation, dem Wiedergabezeitraum und spezifischen Vorgaben des Dritten ab, die auch von der Art des Verkaufsraums abhängen. Die genaue Gestaltung des Erfassungszeitraums t(ERF) anhand der Erfassungsvorgaben EV ist für die vorliegende Erfindung aber unwesentlich.

In einem Schritt 350 werden von einem Warenwirtschaftssystem 61 für den Erfassungszeitraum Erfassungs-Informationen EI zu den von der Gesamtpräsentation umfassten Produkten abgerufen (oder empfangen) und gespeichert. Dazu ist das Warenwirtschaftssystem 61 zumindest temporär mit dem Client-Computer 70 über eine Kommunikationsverbindung 52 verbunden, wie es in Figur 2 dargestellt ist. Alternativ kann das Warenwirtschaftssystem 61 auch zumindest temporär über das Kommunikationsnetzwerk 50 mit dem Server-Computer 90 des Dienstleisters verbunden sein. Das Warenwirtschaftssystem 61 ist ebenfalls Teil des erfindungsgemäßen Computersystems.

Das Warenwirtschaftssystem 61 kann beispielsweise mit einer (in den Figuren nicht dargestellten) Kommissioniervorrichtung gekoppelt sein, in welcher zumindest einige der von der Gesamtpräsentation umfassten Produkte gelagert sein können und auf Anweisung eines das Warenwirtschaftssystem 61 bedienenden Apothekers 62 ausgelagert werden können.

In einem Schritt 360 werden die von dem Warenwirtschaftssystem 61 empfangenen Erfassungs-Informationen mit Kontroll-Informationen KI verglichen. Die Kontroll-Informationen geben die Verkaufszahlen der von der Gesamtpräsentation umfassten Produkte für einen bestimmten Zeitraum wieder, wobei dieser Zeitraum nach Möglichkeit nicht durch die Wiedergabe einer ähnlichen Gesamtpräsentation, welche mehrere der Produkte der aktuellen Gesamtpräsentation umfasste, beeinflusst sein sollte. Unschädlich ist es jedoch, wenn eine geringe Anzahl der Produkte der aktuellen Gesamtpräsentation auch in dem vorgenannten Kontrollzeitraum wiedergegeben wurde; eine Analyse der Auswirkung der Darstellung der Medieninhalte ist dann für diese Produkte jedoch nur noch begrenzt möglich, indem beispielsweise ausgewertet wird, inwiefern eine wiederholte Wiedergabe der Medieninhalte Auswirkung auf das Kaufverhalten von Kunden hat.

In einem Schritt 370 werden die bei dem Vergleich ermittelten Ergebnisse VE dem Dritten und/oder Anbietern der Produkte, die von der Gesamtpräsentation umfasst waren, bereitgestellt.

Wie es in Figur 2 zu erkennen ist, sind einige der vorgenannten Schritte zwangsläufig auf dem Server-Computer 90 des Dienstleisters auszuführen, wie beispielsweise das Zusammenstellen der Gesamtpräsentation. Nachfolgende Verfahrensschritte, wie beispielsweise das Bestimmen des Erfassungszeitraums und/oder das Abrufen oder Empfangen und Speichern der Erfassungs-Informationen können mittels des Client-Computers 70 und/oder des Server-Computers 90 durchgeführt werden. Die Verteilung der vorgenannten Verfahrensschritte ist für das erfindungsgemäße Verfahren unwesentlich und kann anhand von Praktibilitätsüberlegungen durchgeführt werden.

Anhand der Vergleichsergebnisse ist es dem Dritten und/oder Anbietern möglich, festzustellen, inwiefern die Darstellung der Medieninhalte auf der Medien-Wiedergabeeinrichtung 75 innerhalb des Verkaufsraums 60 eines Dritten 10, 11 den Abverkauf der in einer Gesamtpräsentation dargestellten Produkte fördert.

Beispielsweise könnte ein Vergleich ergeben, dass ein einem Medieninhalt MI1 zugeordnetes Produkt für einen Kontrollzeitraum t(KON) x-Mal verkauf wurde, in dem Erfassungszeitraum t(ERF) der Verkauf jedoch um 7 % erhöht war. Bei einem anderen Medieninhalt, der ein anderes Produkt betrifft, kann beispielsweise ermittelt werden, dass der Verkauf für einen entsprechenden Zeitraum nicht positiv beeinflusst wurde. Dies kann beispielsweise darauf hindeuten, dass der Medieninhalt von einem Kunden nicht gut angenommen wird.

Bei der zuvor beschriebenen Ausführungsform des erfindungsgemäßen Verfahrens wurde die Gesamtpräsentation für einen vorbestimmten Wiedergabezeitraum auf der Medien-Wiedergabeeinrichtung wiedergegeben. Das Verfahren war also statisch und nicht beeinflusst von dynamischen Faktoren.

Bei einer alternativen Ausführungsform des erfindungsgemäßen Verfahrens ist es beispielsweise denkbar, die Präsentations-Vorgaben PVx von äußeren Einflüssen abhängig zu machen. So ist es beispielsweise denkbar, eine gerade aktive wiedergegebene Gesamtpräsentation durch eine neue Gesamtpräsentation zu ersetzen, wenn seitens des Dritten registriert wird, dass sich beispielsweise die Witterungsbedingungen langfristig und erheblich ändern.

Alternativ ist es denkbar, die aktuell in einem Verkaufsraum 60 wiedergegebene Gesamtpräsentation von aktuell in dem Verkaufsraum anwesenden Kunden 80, 81, 82 (siehe Figur 2) abhängig zu machen. Dazu können beispielsweise die MAC-Adressen der von den Kunden mitgeführten Mobilgeräte 83, 84, 85 beim Betreten des Verkaufsraums 60 über eine Scan-Einrichtung 63 ausgelesen werden.

Mittels des Warenwirtschaftssystems kann ermittelt werden, ob zu einem Kunden (mit einem Mobilgerät mit einer bestimmten MAC-Adresse) Daten vorliegen, die auf die Kaufvorlieben des Kunden Rückschlüsse zulassen. Wenn dies beispielsweise für fünf sich gleichzeitig in dem Verkaufsraum aufhaltende Kunden ermittelt wird, kann es lohnenswert sein, basierend auf den Kaufvorlieben dieser Kunden neue Präsentations-Vorgaben zu erstellen und diese an den Server-Computer zur unmittelbaren Zusammenstellung und Bereitstellung einer neuen Gesamtpräsentation weiterzuleiten. Auf diese Weise ist es möglich, während der Anwesenheit von speziellen Kundengruppen die Medieninhalte wiederzugeben, die solche Produkte betreffen, die von den in dem Verkaufsraum anwesenden Kunden bevorzugt erworben werden.

Bei einer alternativen Ausführungsform kann es ferner vorgesehen sein, die Gesamtdauer t(GP) der Gesamtpräsentation an die durchschnittliche Verweildauer eines Kunden 80, 81, 82 in dem Verkaufsraum 60 anzupassen, um zu erreichen, dass ein Kunde im Durchschnitt die Möglichkeit hat, sämtliche Medieninhalte der Gesamtpräsentation während seiner Verweildauer in dem Verkaufsraum wahrzunehmen.

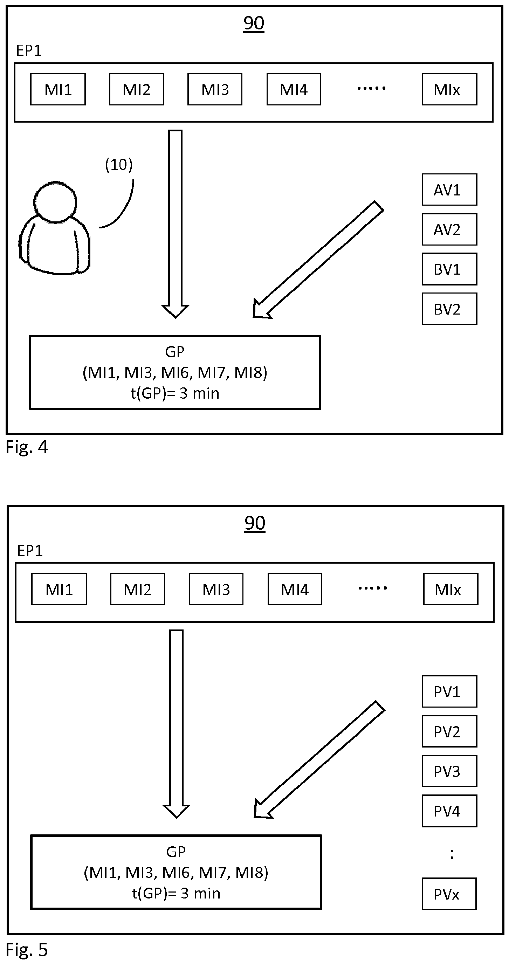

Bei der zuvor beschriebenen Ausführungsform wurde die Gesamtpräsentation anhand von Präsentations-Vorgaben eines Dritten zusammengestellt. Wie es oben bereits beschrieben ist, und in Figur 4 dargestellt ist, kann die Gesamtpräsentation GP auch bereitgestellt werden, indem auf dem Server-Computer 90 eine oder mehrere Entwurfspräsentationen EPx bereitgestellt werden. Diese umfassen jeweils eine Mehrzahl von Medieninhalten MI1 - MIx. Der Dritte 10 kann die Gesamtpräsentation GP beispielsweise zusammenstellen, indem er aus diesen x Medieninhalten diejenigen abwählt, die von der Gesamtpräsentation GP nicht umfasst sein sollen. Alternativ können diejenigen Medieninhalte ausgewählt werden, welche in die Gesamtpräsentation GP enthalten sein sollen. Bei dem "Zusammenstellen" der Gesamtpräsentation kann es vorgesehen sein, dass Anbietervorgaben AVx und/oder Betreibervergaben BVx befolgt werden müssen. Eine Anbietervorgabe kann beispielsweise sein, dass ein Medieninhalt MIx nur zusammen mit Medieninhalt MIy umfasst sein kann oder dass bei Aufnahme von MIx in die Gesamtpräsentation eine Aufnahme von MIy nicht möglich ist. Eine Betreibervorgabe BVx kann sein, dass die Gesamtpräsentation mindestens x Medieninhalte umfasst und/oder mindestens z.B. 3 Minuten lang ist. Nach dem Zusammenstellen der Gesamtmedienpräsentation entspricht der Verfahrensablauf dem oben unter Bezugnahme auf die erste Ausführungsform beschriebenen Verfahrensablauf.

Die beiden vorgenannten Varianten zum Zusammenstellen der Gesamtpräsentation können in einer weiteren bevorzugten Ausführungsform, die in Figur 5 dargestellt ist, auch kombiniert werden, und zwar indem die Gesamtpräsentation GP anhand von Präsentationsvorgaben PVx eines Dritten ausgewählt und zusammengestellt wird. Nach dem Zusammenstellen der Gesamtpräsentation entspricht der Verfahrensablauf wieder dem oben unter Bezugnahme auf die erste Ausführungsform beschriebenen Verfahrensablauf.

## Patentansprüche

1. Verfahren zum Analysieren der Auswirkung von Darstellungen von Medieninhalten (MI) in einem Verkaufsraum (60), welcher mit einem Warenwirtschaftssystem (61) ausgestattet ist, wobei
auf einem Server-Computer (90) eine mehrere Medieninhalte (MI) umfassende Gesamtpräsentation (GP) bereitgestellt wird,
die Gesamtpräsentation (GP) auf einen Client-Computer (70) des Dritten übertragen wird,
die Gesamtpräsentation (GP) für einen vorgegebenen Wiedergabezeitraum (t(WIE)) auf einer in dem Verkaufsraum (60) angeordneten Medien-Wiedergabeeinrichtung (75) wiedergegeben wird,
in Abhängigkeit von dem Wiedergabezeitraum (t(WIE)) und spezifischen Erfassungsvorgaben (EV) ein Erfassungszeitraum (t(ERF)) bestimmt wird,
von dem Warenwirtschaftssystem (61) für den Erfassungszeitraum Erfassungs-Informationen (EI) zu den von der Gesamtpräsentation (GP) umfassten Produkten abgerufen oder empfangen und gespeichert werden, und
die Erfassungs-Informationen (EI) mit Kontroll-Informationen (KI) zu den von der Gesamtpräsentation umfassten Produkten verglichen werden.,

2. Verfahren zum Analysieren der Auswirkung von Darstellungen von Medieninhalten in einem Verkaufsraum (60) nach Anspruch 1,
**dadurch gekennzeichnet, dass** die Gesamtpräsentation bereitgestellt wird, indem auf dem Server-Computer (90) zumindest eine mehrere Medieninhalte (MI) umfassende Entwurfspräsentation (EP) bereitgestellt wird und
von einem Dritten (10, 11) diejenigen Medieninhalte (MI) einer Entwurfspräsentation (EP) ausgewählt werden, die von der Gesamtpräsentation (GP) umfasst sein sollen.

3. Verfahren zum Analysieren der Auswirkung von Darstellungen von Medieninhalten in einem Verkaufsraum (60) nach Anspruch 1,
**dadurch gekennzeichnet, dass** die Gesamtpräsentation (GP) bereitgestellt wird, indem von einem Dritten (10, 11) Präsentations-Vorgaben (PV) zu einer gewünschten Gesamtpräsentation (GP) empfangen und auf dem Server-Computer (90) gespeichert werden,
auf dem Server-Computer (90) gespeicherte Medieninhalte (MI) von zumindest einem Anbieter (30, 31) unter Berücksichtigung der Präsentations-Vorgaben (PV) des Dritten (10, 11) zu der mehrere Medieninhalte (MI) umfassenden Gesamtpräsentation (GP) zusammengestellt werden.

4. Verfahren zum Analysieren der Auswirkung von Darstellungen von Medieninhalten in einem Verkaufsraum (60) nach Anspruch 1,
**dadurch gekennzeichnet, dass** die Gesamtpräsentation bereitgestellt wird, indem auf dem Server-Computer (90) zumindest eine mehrere Medieninhalte (MI) umfassende Entwurfspräsentation (EP) bereitgestellt wird,
von einem Dritten (10, 11) Präsentations-Vorgaben (PV) zu einer gewünschten Gesamtpräsentation (GP) empfangen und auf dem Server-Computer (90) gespeichert werden, und
unter Berücksichtigung der Präsentations-Vorgaben (PV) eine Entwurfspräsentation (EP) ausgewählt wird, und
unter Berücksichtigung der Präsentations-Vorgaben (PV) diejenigen Medieninhalte (MI) einer Entwurfspräsentation (EP) ausgewählt werden, die von der Gesamtpräsentation (GP) umfasst sein sollen.

5. Verfahren zum Analysieren der Auswirkung von Darstellungen von Medieninhalten in einem Verkaufsraum (60) nach Anspruch 3 oder 4,
**dadurch gekennzeichnet, dass** die Medieninhalte (MI) von einem Anbieter (30, 31) mit Medien-Tags (MT) bereitgestellt werden und
dass die Medieninhalte (MI) unter Berücksichtigung der Präsentations-Vorgaben (PV) und der Medien-Tags (MT) zu einer Gesamtpräsentation (GP) zusammengestellt werden.

6. Verfahren zum Analysieren der Auswirkung von Darstellungen von Medieninhalten in einem Verkaufsraum (60) nach einem der Ansprüche 3 - 5,
**dadurch gekennzeichnet, dass** sobald von dem Dritten neue Präsentations-Vorgaben (PV) empfangen werden,
auf dem Server-Computer (90) gespeicherte Medieninhalte (MI) von zumindest einem Anbieter unter Berücksichtigung der Präsentations-Vorgaben (PV) des Dritten und/oder der Medien-Tags (MT) zu einer mehrere Medieninhalte umfassenden neuen Gesamtpräsentation (GP) zusammengestellt werden, oder
unter Berücksichtigung der Präsentations-Vorgaben (PV) diejenigen Medieninhalte (MI) einer Entwurfspräsentation (EP) ausgewählt werden, die von einer neuen Gesamtpräsentation (GP) umfasst sein sollen.

7. Verfahren zum Analysieren der Auswirkung von Darstellungen von Medieninhalten in einem Verkaufsraum (60) nach einem der Ansprüche 3 - 6,
**dadurch gekennzeichnet, dass** die Präsentations-Vorgaben (PV) unter Berücksichtigung von in dem Verkaufsraum (60) anwesenden Kunden (80, 81, 82) bestimmt werden.

8. Verfahren zum Analysieren der Auswirkung von Darstellungen von Medieninhalten in einem Verkaufsraum (60) nach einem der Ansprüche 3 - 7,
**dadurch gekennzeichnet, dass** die Präsentations-Vorgaben (PV) unter Berücksichtigung von Jahreszeiten, Tageszeiten und Wochentagen bestimmt werden.

9. Verfahren zum Analysieren der Auswirkung von Darstellungen von Medieninhalten in einem Verkaufsraum (60) nach einem der Ansprüche 1 - 8,
**dadurch gekennzeichnet, dass** Medieninhalte (MI) zusammen mit Zusatzinhalten empfangen und gespeichert werden und die Zusatzinhalte bei dem Zusammenstellen der Gesamtpräsentation (GP) umfasst werden und
dass bei einer Aktivierung der Medien-Wiedergabeeinrichtung (75) Zusatzinhalte auf der Medien-Wiedergabeeinrichtung (75) wiedergeben werden.

10. Verfahren zum Analysieren der Auswirkung von Darstellungen von Medieninhalten in einem Verkaufsraum (60) nach einem der Ansprüche 1 - 9,
**dadurch gekennzeichnet, dass** ein Zusammenstellen der Gesamtpräsentation (GP) an eine mittlere Verweildauer eines Kunden (80, 81, 82) in dem Verkaufsraum angepasst wird.

11. Computersystem mit
einem Server-Computer (90),
einem Client-Computer (70),
einer Medien-Wiedergabeeinrichtung (75),
wobei der Server-Computer (90), der Client-Computer (70) und die Medien-Wiedergabeeinrichtung (75) zum Ausführen des Verfahrens nach einem der Ansprüche 1 - 10 eingerichtet sind.

12. Computerprogrammprodukt, aufweisend Programmanweisungen, die einen Mikroprozessor zur Ausführung und/oder Steuerung eines Verfahrens gemäß einem der Ansprüche 1 - 10 veranlassen.
